## Europäisches Patentamt

## European Patent Office

## Office européen des brevets

(19)

(11) Numéro de publication: **0 201 443**
**B1**

(12) **FASCICULE DE BREVET EUROPÉEN**

(45) Date de publication du fascicule du brevet:
10.08.88

(51) Int. Cl.⁴: **B 30 B 9/24**

(21) Numéro de dépôt: **86460006.9**

(22) Date de dépôt: **17.04.86**

(54) **Presse à bandes filtrantes.**

(30) Priorité: **26.04.85 FR 8506524**

(43) Date de publication de la demande:
**17.12.86 Bulletin 86/46**

(45) Mention de la délivrance du brevet:
**10.08.88 Bulletin 88/32**

(84) Etats contractants désignés:
**AT BE CH DE GB IT LI LU NL SE**

(56) Documents cité:
**DE-A-2 823 409**
**DE-A-3 322 433**
**FR-A-1 231 628**
**FR-A-2 066 083**
**US-A-2 209 760**
**US-A-3 130 667**

(73) Titulaire: **ETUDES DE MACHINES SPECIALES DE L'OUEST, 9, rue Jean- Marie Tullou Z.A Planche Fagline, F-35740 Pace (FR)**

(72) Inventeur: **Saulnier, Michel, 8, rue Belle Epine, F-35760 Montgermont (FR)**

(74) Mandataire: **Martin, Jean- Jacques, Cabinet REGIMBEAU Corre, Martin, Schrimpf, Warcoin, Ahner 11, rue Franz Heller, F-35700 Rennes (FR)**

EP 0 201 443 B1

## Description

La présente invention concerne une presse servant à extraire les liquides d'une matière qui en contient.

Cette presse est adaptée pour presser des matières de consistance et de texture diverses telles que des liquides contenant des particules en suspension, des pâtes plus ou moins liquides, des matériaux solides (et humides) en morceaux.

Comme exemples d'utilisation possible de cette presse on peut citer le traitement des boues des stations d'épuration, l'assèchement de la tourbe, l'essorage de matières cellulosiques ou fibreuses dans les installations de fabrication de papier, l'extraction du jus de la pulpe de fruits.

L'invention se rapporte plus précisément à une presse dite "à bandes filtrantes", du type comprenant une paire de bandes poreuses mobiles qui sont agencées pour recevoir et presser entre elles la matière à traiter. Ce genre de presse comporte généralement une série de rouleaux rotatifs parallèles adaptés pour guider les deux bandes en mouvement suivant une trajectoire sinueuse, cette série de rouleaux comprenant des rouleaux de renvoi à axe fixe alternés avec des rouleaux presseurs à axe mobile. Les rouleaux presseurs sont déplacés de telle manière que la compression exercée par les deux bandes sur la matière emprisonnée entre elles soit de plus en plus forte dans le sens de leur avance. Sous l'effet de cette compression, le liquide contenu dans la matière traitée traverse les bandes poreuses; l'extraction du liquide se fait progressivement d'une extrémité à l'autre de la trajectoire des bandes, la forme sinueuse de celle-ci favorisant cette extraction. La matière asséchée ou "gâteau" est récupérée en amont de cette trajectoire.

Une presse de ce type est décrite par exemple dans le brevet français n° 2 191 993.

On connaît aussi, par le brevet français 1 231 628 un appareillage pour la filtration de liquides contenant en suspension une matière colloïdale coagulée, en vue de la préparation de lait caillé.

Cet appareillage est du type comprenant deux bandes filtrantes parallèles passant alternativement sur une série de rouleaux de renvoi tous situés dans le même plan. Ces rouleaux de renvoi ayant un axe fixe, ils ne réalisent pas un pressage progressif de la matière d'amont en aval de l'appareillage, l'écartement mutuel des deux bandes demeurant apparemment constant. L'opération réalisée n'est donc pas véritablement un pressage, mais plutôt un égouttage amélioré; c'est pourquoi un tel appareillage ne peut naturellement pas être utilisé pour le traitement des boues, l'assèchement de la tourbe, et autres applications nécessitant une pression de travail élevée.

Il a déjà été proposé également, par le brevet français 2 066 083, une presse comportant deux bandes filtrantes mobiles, particulièrement adaptée au pressage de fruits. Ces bandes, qui suivent une trajectoire sensiblement rectiligne, passent entre des rouleaux de pression successifs qui coopèrent chacun avec une paire de rouleaux de support de telle manière que la pression de serrage augmente d'amont en aval de la presse.

Malheureusement, l'expérience a montré que ce type de presse présentait un rendement relativement faible, malgré un fort encombrement. Par ailleurs, au passage entre chaque rouleau de pression et ses rouleaux de support, les bandes initialement rectilignes sont brusquement pincées, et la matière emprisonnée entre elles forme un bourrelet qui a tendance à ne pas pénètrer entre ces rouleaux; on observe donc à ce niveau un glissement de la matière par rapport aux bandes, glissement qui est cause d'échauffement et d'usure prématurée des bandes et qui naturellement réduit l'efficacité de la presse.

La présente invention se propose d'améliorer sensiblement les presses du genre mentionné sur les plans des performances, de la robustesse, de la compacité et de la flexibilité de leur adaptation à des matières différentes.

Ce résultat est obtenu par le fait que les axes de l'ensemble des rouleaux - presseurs et de renvoi - sont situés sensiblement dans un même plan, et qu'à chaque rouleau presseur est associé un jeu de galets d'appui situé de l'autre côté des bandes, des moyens étant prévus qui permettent de déplacer chaque rouleau presseur contre les bandes et d'appliquer celles-ci, avec une force réglable, contre le jeu de galets d'appui associé.

L'expérience a montré que la disposition des axes de l'ensemble des rouleaux dans un plan commun donnait à la trajectoire des bandes une forme sinueuse qui:

- d'une part permet leur passage progressif, sans apparition de bourrelets entre chaque rouleau presseur et les galets d'appui associés;

- d'autre part favorise l'échappement des liquides à l'extérieur des bandes. En outre, la compression des bandes contre les galets d'appui au moyen des rouleaux presseurs réalise une extraction particulièrement efficace des liquides, la matière traitée étant refoulée contre les parois des bandes par un effet similaire au laminage. Par ailleurs, la poussée exercée sur les bandes par les rouleaux presseurs est absorbée par les galets d'appui, et non plus par les bandes filtrantes, ce qui accroît considérablement leur durée de vie.

Les moyens qui permettent de déplacer les rouleaux presseurs sont avantageusement des vérins hydrauliques. Dans ce cas, il est prévu une centrale de commande programmable agencée pour alimenter en liquide hydraulique chacun de ces vérins, sous une pression prédéterminée.

Il est ainsi possible simplement d'une part d'adapter la valeur des pressions du pressage aux caractéristiques physiques de la matière traitée, d'autre part d'échelonner ces pressions, suivant la manière souhaitée, d'une extrémité à l'autre de la trajectoire des bandes.

Le jeu de galets d'appui est constitué par exemple de deux ou de trois galets, et leur diamètre est sensiblement inférieur à celui des rouleaux presseurs.

Dans une forme de réalisation préférentielle, relativement compacte, la presse est équipée de plusieurs séries juxtaposées de rouleaux rotatifs (rouleaux presseurs et rouleaux de renvoi) , par exemple de deux ensembles de rouleaux dont les axes sont situés sensiblement dans deux plans parallèles.

Dans ce cas, selon une caractéristique intéressante, les vérins hydrauliques permettant de déplacer les rouleaux presseurs sont disposés entre ces deux ensembles et présentent chacun deux tiges de piston indépendantes et opposées qui sont reliées l'une à un rouleau presseur de l'un des deux ensembles, et l'autre à un rouleau presseur de l'autre ensemble. Cet arrangement améliore encore la simplicité et la compacité de la presse.

L'entraînement des bandes filtrantes est avantageusement réalisé par friction au moyen de deux tambours sur lesquels les bandes sont partiellement enroulées; ces tambours, qui sont eux-mêmes entraînés en rotation par un moteur, sont placés l'un en amont et l'autre en aval des rouleaux de renvoi et presseurs.

Selon une caractéristique préférée, la presse est pourvue de moyens de réglage automatique de la tension des bandes filtrantes. Ces moyens comprennent avantageusement deux galets presseurs et chacun de ces galets est appliqué contre l'une des bandes au moyen d'un vérin hydraulique. Dans ce cas, l'alimentation des vérins en liquide hydraulique se fait de préférence à partir de la centrale de commande, sous des pressions qui sont asservies à celles qui alimentent les vérins servant à solliciter les rouleaux presseurs.

Ce reglage automatique de la tension de la bande fait que la presse travaille toujours dans de bonnes conditions et notamment supprime le risque d'un allongement excessif des bandes, au delà de leur limite d'allongement élastique.

Pour faciliter l'évacuation des liquides traversant les bandes filtrantes et, corrélativement, accroître l'efficacité de la presse, les rouleaux de renvoi, les rouleaux presseurset (éventuellement) les tambours d'entraînement sont de préférence des cylindres creux à paroi perforée.

D'autres avantages de l'invention apparaîtront de la description et des dessins annexés qui en présentent un mode de réalisation préférentiel.

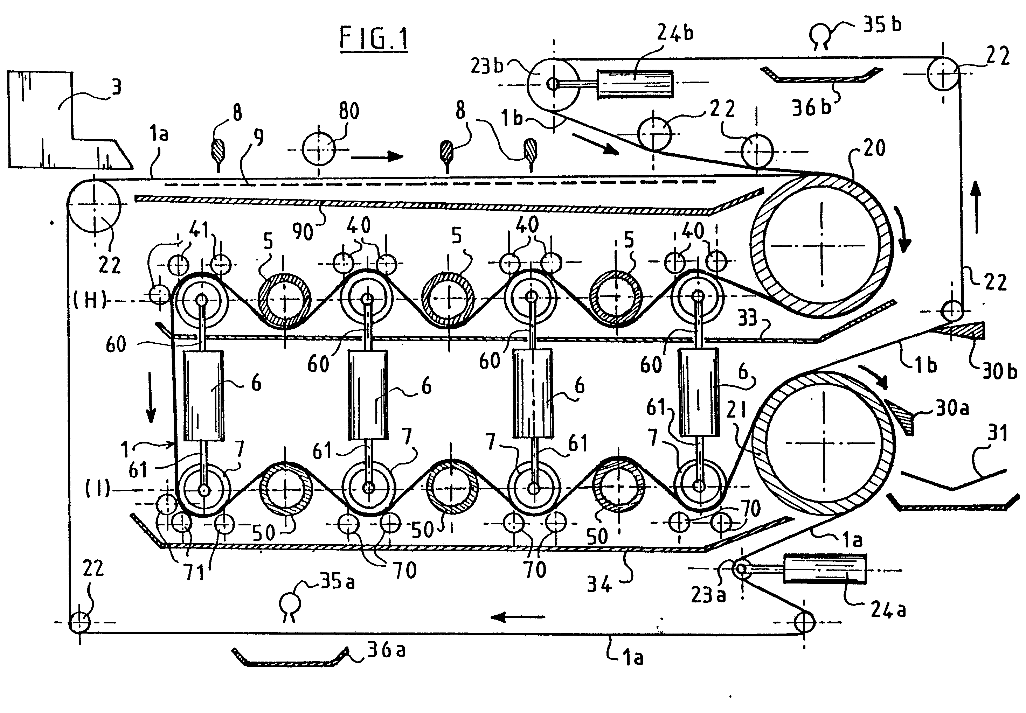

Sur ces dessins, la figure 1 est une vue générale schématique de la presse,

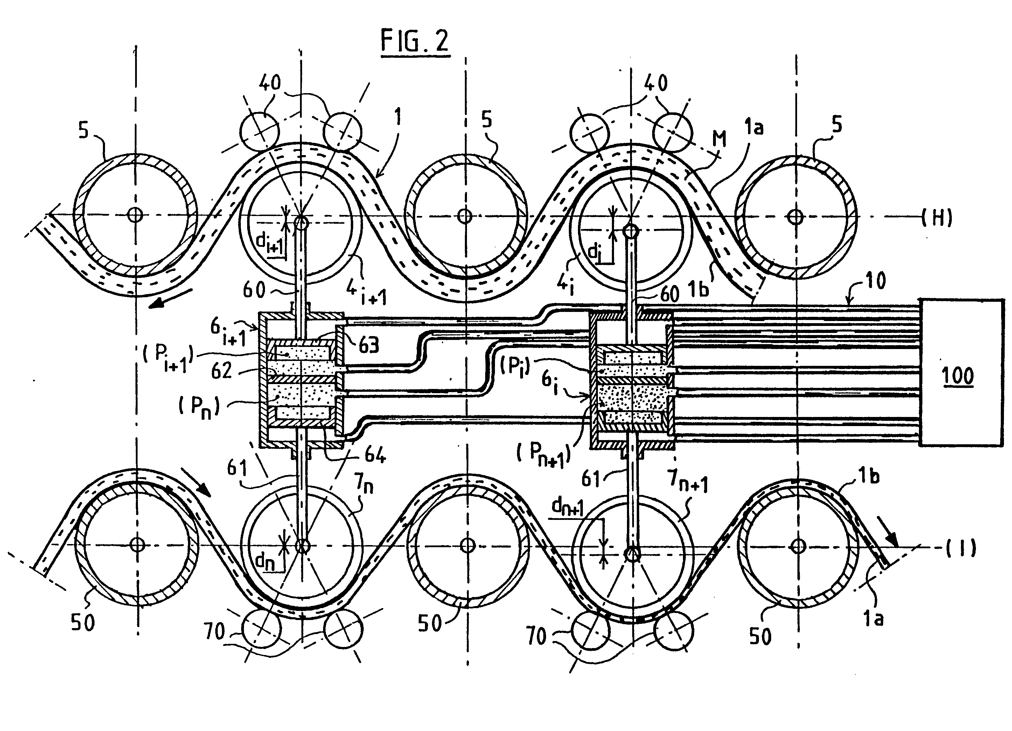

La figure 2 est un détail à plus grande échelle montrant deux tronçons superposés de la trajectoire des bandes filtrantes.

La presse représentée sur les figures comprend une paire de bandes sans fin 1a, 1b qui sont entraînées par des tambours cylindriques 20, 21; ces derniers sont eux-mêmes entraînés par un moteur, électrique ou hydraulique, par exemple par un moto-variateur. Les bandes sans fin 1a, 1b, sont des toiles métalliques ou synthétiques poreuses; les dimensions moyennes de pores des toiles utilisées dépendent naturellement de la matière qui doit être traitée par la presse; ces dimensions sont avantageusement comprises dans une fourchette de 50 à 500 micromètres.

Durant leur trajet en circuit fermé, les deux bandes 1a, 1b ont tout d'abord une trajectoire séparée, puis se rapprochent progressivement l'une de l'autre, de manière à venir enserrer entre elles la matière traitée; ensuite, se trouvant à l'état juxtaposé dans lequel elles sont désignées par la référence générale 1, elles ont une trajectoire commune au cours de laquelle s'effectue le pressage proprement dit de la matière et l'extraction du liquide; ensuite, les bandes sont à nouveau séparées l'une de l'autre et nettoyées.

La matière à traiter, par exemple une boue, est introduite avec un floculant dans un dispositif mélangeur et distributeur 3, à partir duquel elle est déversée de manière continue sur l'une des bandes sans fin 1a. Le tronçon de bande 1a recevant la matière est un tronçon rectiligne horizontal suivant lequel la bande 1a est supportée par une grille perforée 9 en matière plastique.

Dans cette première partie du trajet, la matière est avantageusement aérée au moyen de peignes transversaux 8, qui sont disposés en quinconce les uns par rapport aux autres; d'autre part la matière est légèrement pressée par un rouleau 80 afin d'être bien étalée et convenablement répartie sur la bande 1a. Durant cette première phase de la trajectoire de la matière, celle-ci est égouttée par gravité, le liquide extrait étant recueilli par un bac 90 situé sous la grille perforée 9.

A l'extrémité de ce tronçon rectiligne, la seconde bande 1b se rapproche progressivement de la bande 1a, venant enserrer par effet de coin la matière étalée sur celle-ci. On notera que le sens d'avance des bandes et de la matière est figuré par des flèches sur les dessins.

Les deux bandes 1a, 1b, qui constituent alors une bande unique 1 chargée de matière à essorer, contournent le premier tambour moteur 20, puis s'engagent dans le dispositif de pressage proprement dit.

Ce dispositif de pressage comprend deux étages identiques superposés: un premier étage (étage supérieur) qui comporte un ensemble de rouleaux presseurs 4, à axe mobile, qui sont alternés avec des rouleaux de renvoi 5 à axe fixe, et un second étage (étage inférieur) qui comprend de même une série de rouleaux presseurs 7 à axe mobile alternés avec des rouleaux de renvoi 50 à axe fixe.

Chaque étage comporte par exemple quatre rouleaux presseurs 4, respectivement 7, et trois rouleaux de renvoi 5, respectivement 50. Les rouleaux de renvoi et les rouleaux presseurs ont avantageusement le même diamètre, par exemple de l'ordre de 400 mm.

Selon une caractéristique importante de l'invention, les axes de l'ensemble des rouleaux de chaque série 4, 5 et 7, 50 sont situés dans un même plan horizontal (H) et respectivement (I).

Ces deux séries (ou étages) de rouleaux sont disposés exactement l'un au dessus de l'autre, de sorte que chacun des rouleaux 4 se trouve à l'aplomb d'un rouleau 7, et que chacun des rouleaux 5 se trouve à l'aplomb d'un rouleau 50. Entre ces deux étages, est disposé un jeu de vérins dont le nombre est égal au nombre de rouleaux presseurs de chaque série, en l'occurrence quatre dans le mode de réalisation représenté. Chacun de ces vérins est un vérin hydraulique à double action; il présente à chacune de ses extrémités une tige de commande 60, 61 qui est solidaire de l'axe d'un rouleau presseur 4, 7 de chacune des séries superposées. Cet arrangement, qui sera décrit plus en détail ultérieurement, en se référant à la figure 2, permet de déplacer chacun des rouleaux presseurs contre la bande 1 et d'appliquer celle-ci fortement, avec une force réglable prédéterminée, contre un jeu de galets d'appui disposés de l'autre côté de la bande. Ces galets d'appui sont au nombre de deux, désignés par la référence 40, pour trois des rouleaux presseurs 4 et 7; ils sont au nombre de trois, désignés par la référence 41, pour les rouleaux presseurs 4 et 7 se faisant suite à l'extrémité de chacun des étages. Ces galets d'appui sont disposés de manière appropriée, adaptée pour absorber correctement la poussée des vérins 6. Ce sont des galets montés fous en rotation sur leur axe, de manière analogue aux rouleaux presseurs 4, 7, et de renvoi 5, 50. Le diamètre de ces galets est sensiblement inférieur à celui de ces rouleaux; il est par exemple de l'ordre de 150 mm.

Au cours du passage de la bande 1 dans ce dispositif de pressage, le liquide contenu dans la matière transportée par celle-ci est progressivement extrait de cette matière et traverse les toiles poreuses 1a, 1b. Les rouleaux presseurs 4, 7 et les rouleaux de renvoi 5, 50 sont de préférence des cylindres creux formés par une grille perforée, par exemple en acier inoxydable; ces perforations facilitent l'évacuation des liquides extraits à leur sortie des bandes 1a, 1b. Les liquides sont ensuite récupérés dans des bacs 33, 34 disposés au-dessous de chacune des séries de rouleaux. A la sortie du dispositif de pressage qui vient d'être décrit, les deux bandes 1 sont entraînées par le second tambour d'entraînement 21 et se séparent l'une de l'autre, de manière à libérer la matière asséchée (appelée gâteau). Des racleurs 30a, 30b enlèvent ce gâteau de chacune des bandes 1a, 1b et le gâteau est déversé sur un transporteur 31 qui l'évacue en continu. En dehors du dispositif de pressage proprement dit, les bandes 1a et 1b sont guidées par une série de galets de renvoi appropriés désignés par 22. On notera également l'existence de dispositif de lavage 35a, 35b des bandes. Ces dispositifs sont situés au-dessus de bacs de récupération 36a, respectivement 36b, des eaux de lavage.

Selon une caractéristique intéressante de l'invention, cette presse est équipée d'un système de réglage automatique de la tension des bandes 1a, 1b. Ce système comprend une paire de vérins hydrauliques 24a, 24b dont les tiges de piston portent chacune un galet presseur 23a, 23b. Ces galets presseurs mobiles sont agencés pour s'appliquer contre l'une des bandes 1a, respectivement 1b. Ces verins 24a, 24b, sont alimentés en liquide hydraulique, à des pressions déterminées, par des moyens qui n'ont pas été représentés dans un simple but de simplification. Les pressions d'alimentation sont asservies aux pressions sous lesquelles les vérins 6 sollicitent les rouleaux presseurs 4 et 7 dans le dispositif de pressage. L'asservissement est tel que, d'une manière générale, la pression fournie au vérin 24a, 24b est d'autant plus faible que les pressions d'alimentation des vérins 6 sont fortes, et inversement. Cette disposition permet d'éviter un allongement excessif - au delà de leur limite élastique - des toiles filtrantes 1a, 1b, qui risquerait de conduire à leur détérioration rapide. Une telle compensation automatique de la tension des bandes 1a, 1b est souhaitable en particulier lorsque ces bandes sont des bandes synthétiques; par contre pour des bandes métalliques, il peut être avantageux de ne pas utiliser ce système de compensation automatique, d'une part parce que la limite d'élasticité à l'allongement de ces bandes est très élevée, d'autre part parce qu'on a remarqué qu'une tension élevée sur les bandes engendrait sur la matière un effet d'écrasement supplémentaire qui améliorait l'efficacité du processus.

La figure 2 montre en détail un tronçon du dispositif de pressage. On y voit deux rouleaux presseurs successifs $4_i$ et $4_{i+1}$ de la série de rouleaux supérieurs et deux rouleaux presseurs successifs $7_n$, $7_{n+1}$ de la série de rouleaux inférieurs. Un vérin $6_i$ sert à solliciter à la fois les deux rouleaux $4_i$ et $7_{n+1}$; un autre vérin $6_{i+1}$ sert à solliciter à la fois les rouleaux $4_{i+1}$ et $7_n$. Chacun des vérins 6 est en réalité un double vérin à double effet. Il comprend deux cylindres indépendants séparés par un cloison médiane 62; dans le cylindre supérieur est monté un piston à double effet 63 dont la tige 60 est solidaire, par son autre extrémité, de l'axe d'un rouleau presseur 4; dans le cylindre inférieur est monté à coulissement un piston à double effet 64, dont la tige 61 est solidaire, par son autre extrémité, d'un rouleau presseur 7. Une centrale de commande programmable 100 est reliée par des canalisations appropriées 10 à chacune des chambres de pression situées de part et d'autre des pistons 63 et 64. Cette centrale, qui peut être de type connu, et qui ne sera pas décrite ici en détail car elle ne fait pas à proprement parler partie de l'invention, permet de développer dans chacune des chambres des vérins 6 les pressions hydrauliques souhaitées qui seront bien entendu fonction des caractéristiques de la matière traitée, ainsi que des caractéristiques des bandes 1a, 1b, et en particulier de la porosité de ces bandes. Les pressions hydrauliques qui sollicitent les rouleaux presseurs $4_i$, $4_{i+1}$, $7_n$ et $7_{n+1}$, en direction de la bande 1, contre les galets d'appui 40, sont désignées respectivement par $(P_i)$, $(P_{i+1})$, $(P_n)$ et $(P_{n+1})$. Selon une caractéristique importante de l'invention, ces pressions sont croissantes suivant le sens d'avance de la bande 1; on a donc $(Pi) < (P_{i+1}) ... < (P_n) < (P_{n+1}) ...$ Il y a par conséquent un léger décalage entre la position effective des axes de chacun des rouleaux presseurs 4, 7 et leur position théorique, dans le plan horizontal (H), (I) contenant respectivement les axes des rouleaux de renvoi 5 et 50. Les valeurs de décalage des rouleaux presseurs $4_i$, $4_{i+1}$, $7_n$, $7_{n+1}$, ont été désignés respectivement par $d_i$, $d_{i+1}$, $d_n$, $d_{n+1}$. Pour les rouleaux $4_i$ et $4_{i+1}$, on constate que ce décalage est négatif, l'axe de ces rouleaux étant en-deçà du plan (H); pour le rouleau $7_n$, le décalage $d_n$ est nul, l'axe de ce rouleau se trouvant sensiblement dans le plan (I); pour le rouleau $7_{n+1}$, le décalage $d_{n+1}$ est positif, l'axe de ce rouleau se trouvant au-delà du plan (I).

Durant son passage entre ces rouleaux, la bande 1 qui est constituée par la superposition de la toile 1a, de la matière M et de la toile 1b, décrit une trajectoire approximativement sinusoïdale favorable à l'extraction des liquides. Les rouleaux presseurs 4 et 7 qui compriment cette bande 1 en l'appliquant fortement contre les galets d'appui 40, réalisent une sorte de laminage. L'épaisseur de la couche de matière M est décroissante en raison de l'augmentation des pressions développées par les rouleaux presseurs 4 puis 7, et de la réduction de volume de cette matière, qui résulte de l'extraction progressive des liquides qu'elle contient. Du fait que les doubles vérins 6 sont des vérins à double effet, il est possible de provoquer la rétraction de ces vérins de manière à écarter complètement les rouleaux presseurs 4 et 7 des galets d'appui 40 et 70 qui leurs sont associés; on effectue notamment cette opération lorsqu'on veut sortir les bandes 1a, 1b de la presse, par exemple pour les réparer ou pour les changer.

Comme on l'a dit plus haut, la centrale de commande 100 sert également à actionner les vérins compensateurs de la tension des bandes 24a, et 24b. Les caractéristiques de l'asservissement des vérins 24 aux vérins 6 dépendent évidemment des caractéristiques mécaniques des bandes utilisées et des matières traitées. La largeur des bandes utilisées est fonction de la puissance de la presse; cette largeur est avantageusement comprise dans une fourchette de 0,5 à 3 mètres.

Les tambours 20 et 21 ont par exemple un diamètre de 800 mm; comme les rouleaux presseurs et les rouleaux de renvoi, ce sont avantageusement des cylindres creux à paroi perforée.

Toutes les parties en contact avec la matière à traiter sont réalisées de préférence en acier inoxydable ou en acier protégé par un résine.

Cette presse est avantageusement équipée d'un système de correction automatique de déplacement latéral des bandes 1a, 1b; ces systèmes qui peuvent être des systèmes connus n'ont pas été décrit dans un but de simplification car ils ne font pas à proprement parler partie de l'invention.

Comme variante au lieu de prévoir deux ensembles étagés de rouleaux presseurs et de renvoi, on pourrait prévoir dans une même presse un nombre supérieur d'ensembles, par exemple trois ou quatre ensembles superposés.

**Revendications**

1. Presse à extraire les liquides d'une matière qui en contient, du type comprenant une paire de bandes filtrantes mobiles (1a, 1b) agencées pour recevoir et presser entre elles la matière, qui comporte au moins une série de rouleaux rotatifs parallèles adaptés pour guider les deux bandes (1) en mouvement suivant une trajectoire sinueuse, cette série de rouleaux comprenant des rouleaux de renvoi (5) à axe fixe alternés avec des rouleaux presseurs (4) à axe mobile, caractérisée en ce que les axes de l'ensemble des rouleaux (5, 4) sont situés sensiblement dans un même plan (H) et qu'à chaque rouleau presseur (4) est associé un jeu de galets d'appui (40, 41) situé de l'autre côté des bandes (1), des moyens (6, 60) étant prévus qui permettent de déplacer chaque rouleau presseur (4) contre les bandes (1) et d'appliquer celles-ci, avec une force réglable, contre le jeu de galets d'appui (40, 41) associé.

2. Presse selon la revendication 1, caractérisée en ce que les moyens permettant de déplacer les rouleaux presseurs (4) sont des vérins hydrauliques (6).

3. Presse selon la revendication 2, caractérisée en ce qu'elle comprend une centrale de commande programmable (100) agencée pour alimenter en liquide hydraulique chacun des vérins (6) sous une pression déterminée.

4. Presse selon l'une des revendications 1 à 3, caractérisée en ce que le jeu de galets d'appui comprend deux galets (40) ou trois galets (41), dont le diamètre est sensiblement inférieur à celui des rouleaux presseurs (4).

5. Presse selon l'une des revendications 1 à 4, caractérisée en ce qu'elle comporte plusieurs séries juxtaposées de rouleaux rotatifs, par exemple deux ensembles de rouleaux (5, 4; 50, 7) dont les axes sont situés sensiblement dans deux plans parallèles (H, I).

6. Presse selon les revendications 2 et 5 prises en combinaison, qui comporte deux ensembles de rouleaux (5, 4; 50, 7) dont les axes sont situés sensiblement dans deux plans parallèles (H, I), caractérisée en ce que les vérins hydrauliques (6) sont disposés entre ces deux ensembles et présentent chacun deux tiges de piston indépendantes et opposées (60, 61) adaptées pour déplacer un rouleau presseur (4, 7) de chaque ensemble.

7. Presse selon l'une des revendications 1 à 6, caractérisée en ce qu'elle comporte deux tambours d'entraînement des bandes (1) situés l'un (20) en amont et l'autre (21) en aval de la (ou des) série(s) de rouleaux de renvoi (5, 50) et presseurs (4, 7).

8. Presse selon l'une des revendications 1 à 7, caractérisée en ce qu'elle comporte des moyens de réglage automatique de la tension des bandes (1a, 1b) comprenant deux galets presseurs (23a, 23b), chacun de ces galets étant appliqué contre l'une des bandes (1a, 1b) au moyen d'un vérin hydraulique (24a, 24b).

9. Presse selon les revendications 3 et 8 prises en combinaison, caractérisée en ce que les vérins (24a, 24b) sont alimentés en liquide hydraulique par la centrale de commande (100) sous des pressions qui sont asservies à celles qui alimentent les vérins (6).

10. Presse selon l'une des revendications 1 à 9, caractérisée en ce que les rouleaux de renvoi (5, 50), les rouleaux presseurs (4, 7) et éventuellement les tambours d'entraînement (20, 21) sont des cylindres creux à paroi perforée.

## Claims

1. Press for extracting liquids from a material containing them, of the type comprising a pair of movable filter belts (1a, 1b) arranged for receiving and pressing the material therebetween, which comprises at least one series of parallel rotary rollers adapted to guide the two belts (1) in a movement along a winding trajectory, this series of rollers comprising return rollers (5) having a fixed axis alternating with pressing rollers (4) having a movable axis, characterised in that the axes of all the rollers (5, 4) are situated substantially in the same plane (H) and that associated with each pressing roller (4) is a set of support rollers (40, 41) situated on the other side of the belts (1), means (6, 60) being provided which make it possible to move each pressing roller (4) against the belts (1) and to press the latter, with an adjustable force, against the associated set of support rollers (40, 41).

2. Press according to Claim 1, characterised in that the means making it possible to move the pressing rollers (4) are hydraulic jacks (6).

3. Press according to Claim 2, characterised in that it comprises a programmable central control unit (100) arranged to supply each of the jacks (6) with hydraulic fluid at a predetermined pressure.

4. Press according to one of Claims 1 to 3, characterised in that the set of support rollers comprises two rollers (40) or three rollers (41), whereof the diameter is substantially less than that of the pressing rollers (4).

5. Press according to one of Claims 1 to 4, characterised in that it comprises several juxtaposed series of rotary rollers, for example two sets of rollers (5, 4; 50, 7) whereof the axes are situated substantially in two parallel planes (H, I).

6. Press according to Claims 2 and 5, taken in combination, which comprises two sets of rollers (5, 4; 50, 7) whereof the axes are situated substantially in two parallel planes (H, I), characterised in that the hydraulic jacks (6) are disposed between these two sets and each comprise two independent and opposed piston rods (60, 61), intended to move a pressing roller (4, 7) of each set.

7. Press according to one of Claims 1 to 6, characterised in that it comprises two drums for driving the belts (1), one (20) being situated upstream and the other (21) being situated downstream of the one (or more) series of return rollers (5, 50) and pressing rollers (4, 7).

8. Press according to one of Claims 1 to 7, characterised in that it comprises means for the automatic regulation of tension of the belts (1a, 1b) comprising two pressing rollers (23a, 23b), each of these rollers being pressed against one of the belts (1a, 1b) by means of a hydraulic jack (24a, 24b).

9. Press according to Claims 3 and 8, taken in combination, characterised in that the jacks (24a, 24b) are supplied with hydraulic fluid by the central control unit (100) at pressures which are governed by those supplied to the jacks (6).

10. Press according to one of Claims 1 to 9, characterised in that the return rollers (5, 50), the pressing rollers (4, 7) and possibly the drive drums (20, 21) are hollow cylinders having a perforated wall.

## Patentansprüche

1. Presse zum Abpressen von Flüssigkeiten von einem diese enthaltenden Stoff von der Art, welche ein Paar bewegbare Filterbände (1a, 1b) umfaßt, die ausgebildet sind, um zwischen sich den Stoff aufzunehmen und zu pressen, wobei jenes wenigstens eine Reihe von parallelen Drehwalzen aufweist, die die zwei sich bewegenden Bänder (1) längs einer wellenförmigen Bahn führen können, wobei diese Walzenreihe Unterbandwalzen (5) mit fester Achse aufweist, die mit Presswalzen (4) mit bewegbarer Achse abwechseln, dadurch gekennzeichnet, daß sich die Achsen der Walzengesamtheit (5, 4) im wesentlichen in derselben Ebene (H) befinden und daß jeder Presswalze (4) ein Satz von Auflagerollen (40, 41) zugeordnet ist, der sich auf der anderen Seite der Bänder (1) befindet, wobei Mittel (6, 60) vorgesehen sind, die ermöglichen, jede Presswalze (4) gegen die Bänder (1) zu bewegen und diese mit einer einstellbaren Kraft gegen den zugeordneten Satz von Auflagewalzen (40, 41) zu drücken.

2. Presse nach Anspruch 1, dadurch gekennzeichnet, daß die Mittel, die die Bewegung der Presswalzen (4) ermöglichen, hydraulische Arbeitszylinder (6) sind.

3. Presse nach Anspruch 2, <u>dadurch gekennzeichnet</u>, daß sie eine programmierbare Steuerstation (100) aufweist, die jeden der Arbeitszylinder (6) mit einer hydraulischen Flüssigkeit bei einem vorbestimmten Druck versorgen kann.

4. Presse nach einem der Ansprüche 1 bis 3, <u>dadurch gekennzeichnet</u>, daß der Satz von Auflagerollen zwei Rollen (40) oder drei Rollen (41) umfaßt, deren Durchmesser wesentlich kleiner als derjenige der Presswalzen (4) ist.

5. Presse nach einem der Ansprüche 1 bis 4, <u>dadurch gekennzeichnet</u>, daß sie mehrere Reihen von nebeneinander angeordneten Drehwalzen aufweist, z. B. zwei Walzeneinheiten (5, 4; 50, 7), deren Achsen im wesentlichen in zwei parallelen Ebenen (H, I) liegen.

6. Presse nach den Ansprüchen 2 und 5 zusammengenommen, die zwei Walzeneinheiten (5, 4; 50, 7) umfaßt, deren Achsen im wesentlichen in zwei parallelen Ebenen (H, I) liegen, <u>dadurch gekennzeichnet</u>, daß die hydraulischen Arbeitszylinder (6) zwischen diesen zwei Einheiten angeordnet sind und jeweils zwei unabhängige und entgegengesetzte Kolbenstangen (60, 61) aufweisen, die eine Presswalze (4, 7) von jeder Einheit bewegen können.

7. Presse nach einem der Ansprüche 1 bis 6, <u>dadurch gekennzeichnet</u>, daß sie zwei Antriebstrommeln für die Bänder (1) aufweist, von denen sich eine (20) stromauf und die andere (21) stromab der Reihe(n) von Unterbandrollen (5, 50) und Presswalzen (4, 7) befindet.

8. Presse nach einem der Ansprüche 1 bis 7, <u>dadurch gekennzeichnet</u>, daß sie automatische Regelmittel für die Spannung der Bänder (1a, 1b) aufweist, welche zwei Druckrollen (23a, 23b) umfassen, wobei jede dieser Rollen gegen eines der Bänder (1a, 1b) mittels eines hydraulischen Arbeitszylinders (24a, 24b) gedrückt wird.

9. Presse nach den Ansprüchen 3 und 8 zusammengenommen, <u>dadurch gekennzeichnet</u>, daß die Arbeitszylinder (24a, 24b) von der Steuerstation (100) mit hydraulischer Flüssigkeit bei Drücken versorgt werden, die mit denjenigen geregelt werden, die die Arbeitszylinder (6) versorgen.

10. Presse nach einem der Ansprüche 1 bis 9, <u>dadurch gekennzeichnet</u>, daß die Unterbandrollen (5, 50), die Druckwalzen (4, 7) und ggf. die Antriebstrommeln (20, 21) Hohlzylinder mit durchbrochener Wand sind.

0 201 443

FIG.1

FIG. 2